# EUROPEAN PATENT APPLICATION

(11) **EP 4 589 697 A1**
(43) Date of publication of application: **23.07.2025**
(21) Application number: 23865234.1
(22) Date of filing: 25.08.2023
(51) Int. Cl.: H01M 8/04, B01D 45/08

(54) **GAS-LIQUID SEPARATOR**

(30) Priority: 15.09.2022 JP 2022146771
(71) Applicant: AISIN CORPORATION, Kariya-shi, Aichi 448-8650 (JP)
(72) Inventor: ARAKAWA, Koichi, Kariya-shi, Aichi 448-8650 (JP); OKUNO, Hitoshi, Kariya-shi, Aichi 448-8650 (JP)
(74) Representative: Winter, Brandl - Partnerschaft mbB
(86) International application number: PCT/JP2023/030675
(87) International publication number: WO 2024/057877

(57) **Abstract**

A gas-liquid separator includes: a housing; a gas-liquid separation portion disposed in an upper part of the housing and configured to separate water from a water-containing gas; a water storage portion disposed in a lower part of the housing and configured to store the water separated from the water-containing gas; a discharge hole passage configured to discharge the water in the water storage portion to the outside of the housing; and a heating member that protrudes into the water storage portion, that is disposed in a region where the water flows into the discharge hole passage, and whose temperature increases by heat transferred from a heat-generating element F configured to generate the heat when energized. The heating member includes: a body that protrudes toward the discharge hole passage at a bottom of the water storage portion with the heat-generating element F disposed outside the water storage portion; and an upper wall that protrudes upward from the body.

## Description

### TECHNICAL FIELD

The present disclosure relates to gas-liquid separators.

### BACKGROUND ART

Patent document 1 describes a fuel cell system including an antifreeze circulating portion that circulates an antifreeze in an exhaust gas passage in order to reduce freezing of water discharged from a fuel cell and passing through the exhaust gas passage.

This Patent Document 1 describes a configuration in which, in order to reduce freezing of the generated water in an oxidizing off-gas passage, an antifreeze using ethylene glycol is injected into the oxidizing off-gas passage, and the antifreeze is separated from the generated water by heating in the downstream portion of the oxidizing off-gas passage, recovered, and reused.

Patent Document 2 describes a fuel cell system that includes a configuration in which water separated by a gas-liquid separator from a fuel off-gas discharged from a fuel cell stack is sent through a fluid inlet to a valve device and is discharged by controlling the valve device, and a heating device is disposed in an inner hole of the fluid inlet.

This Patent Document 2 describes that a PTC heater that generates heat when supplied with electricity is placed as the heating device in an end of a cylindrical cover body, and that when water inside the cover body freezes, the water is thawed by heat generated by the PTC heater.

Patent Document 3 describes a fuel cell system in which a fuel exhaust gas discharged from an anode electrode is separated into gas and liquid in a gas-liquid separator, a compressed oxidant gas is introduced into a discharge channel that discharges the liquid, and the discharge channel and a region near the discharge channel are heated by the heat of the compressed oxidant gas.

This Patent Document 3 also describes a heater unit that heats the compressed oxidant gas to be introduced into the exhaust passage.

### Related Art Documents

### Patent Documents

Patent Document 1: Japanese Unexamined Patent Application Publication No. 2005-5228 (JP 2005-5228 A)
Patent Document 2: Japanese Unexamined Patent Application Publication No. 2019-139935 (JP 2019-139935 A)
Patent Document 3: Japanese Unexamined Patent Application Publication No. 2019-149339 (JP 2019-149339 A)

### SUMMARY OF THE INVENTION

### Problem to be Solved by the Invention

In a power generation system using a fuel cell, a fuel off-gas (anode off-gas) from which water has been removed by a gas-liquid separator is returned to a fuel gas supply channel in order to reuse in the fuel cell a fuel gas contained in the fuel off-gas.

As described in Patent Document 2, the gas-liquid separator is used in such a manner that the separated water is temporarily stored at the bottom and the stored water is discharged to the outside by opening a valve at a predetermined timing.

When a fuel cell vehicle that runs on electricity generated by a fuel cell travels in a cold area or is parked in a cold area, water stored at the bottom of a gas-liquid separator may freeze, and it may be difficult to discharge the water. When a fuel cell vehicle is parked in a cold area, control is performed to discharge water stored in a gas-liquid separator when power generation by a fuel cell is stopped. However, water droplets remaining on the anode side of the fuel cell or in a path through which an anode off-gas flows may flow into the gas-liquid separator and freeze. Therefore, some kind of measure is required.

One possible way to solve such an issue is to prevent freezing using the antifreeze described in Patent Document 1. However, in the configuration in which water is separated from the antifreeze by evaporating the water by heating with a heater as described in Patent Document 1, a large amount of current is consumed by the heater, and a mechanism for recovering the antifreeze may be complicated.

As described in Patent Document 2, the configuration using the PTC heater can also heat the valve device by the heat generated by the PTC heater when energized. In this configuration, however, the PTC heater and the valve device are separated from each other. It is therefore expected to take a long time to eliminate freezing near the valve device. If the PTC heater is disposed near the valve device in the configuration of Patent Document 2, the PCT heater may interfere with the water flow.

Another possible way is to provide a configuration that eliminates freezing of a liquid outlet of the gas-liquid separator by supplying the compressed oxidant gas as described in Patent Document 3. However, the configuration of Patent Document 3 requires a dedicated gas channel, which may complicate the configuration.

For these reasons, there is a demand for a gas-liquid separator that has a simple configuration yet can eliminate freezing at the bottom of the gas-liquid separator and can quickly discharge water at the bottom.

### Means for Solving the Problem

A characteristic configuration of a gas-liquid separator according to the present disclosure is that the gas-liquid separator includes: a housing to which a water-containing gas is supplied; a gas-liquid separation portion disposed in an upper part of the housing and configured to separate water from the water-containing gas; a water storage portion disposed in a lower part of the housing and configured to store the water separated from the water-containing gas by the gas-liquid separation portion; a discharge hole passage disposed in a lower part of the water storage portion of the housing and configured to discharge the water sent from the water storage portion to outside of the housing; and a heating member that protrudes into the water storage portion, that is disposed in a region where the water flows into the discharge hole passage, and whose temperature increases by heat transferred from a heat-generating element configured to generate the heat when energized, and that the heating member includes a body that protrudes toward the discharge hole passage at a bottom of the water storage portion with the heat-generating element disposed outside the water storage portion, and an upper wall that protrudes upward from the body.

With this configuration, in a situation where the water in the water storage portion freezes, the temperature of the heating member is increased to apply heat directly to a frozen portion in the region where the water in the water storage portion flows into the discharge hole passage at the bottom of the water storage portion. The frozen portion can thus be thawed. Since the heating member includes the body and the upper wall protruding upward from the body, the temperature of the water storage portion is increased by bringing a region with a large heat transfer area (mainly the upper wall) into contact with the water flowing into the water storage portion. Therefore, even freezing at a relatively high water level in the water storage portion can be eliminated. Moreover, in this configuration, the heat of the heat-generating element disposed outside the water storage portion is transferred to the heating member. This eliminates the risk of the water in the water storage portion coming into contact with the heat-generating element, and thus ensures electrical insulation. The gas-liquid separator is thus configured that has a simple configuration yet can eliminate freezing at the bottom of the gas-liquid separator and can quickly discharge the water at the bottom.

### BRIEF DESCRIPTION OF THE DRAWINGS

[FIG. 1] FIG. 1 is a diagram schematically showing a gas flow between an anode side of a fuel cell and a gas-liquid separator.
[FIG. 2] FIG. 2 is a perspective view showing the gas-liquid separator, and a heating member and a holder that are in an assembled state.
[FIG. 3] FIG. 3 is an exploded perspective view of the heating member, a heat-generating element, and the holder.
[FIG. 4] FIG. 4 is a sectional view of a lower part of the gas-liquid separator with an on-off valve closed.
[FIG. 5] FIG. 5 is a sectional view of the lower part of the gas-liquid separator with the on-off valve open.
[FIG. 6] FIG. 6 is a diagram showing the heat-generating element and a set of sections of the heat-generating element taken along a plurality of lines.
[FIG. 7] FIG. 7 is a side view showing a heat-generating element of another embodiment (a).

### MODES FOR CARRYING OUT THE INVENTION

Hereinafter, an embodiment of the present disclosure will be described with reference to the drawings.

### [Basic Configuration]

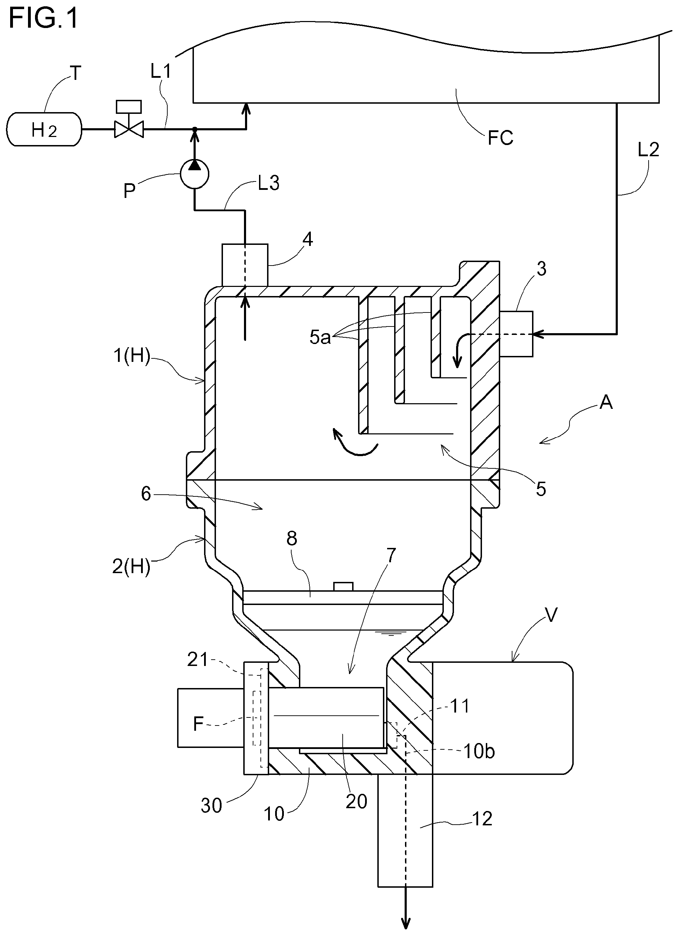

FIG. 1 shows a fuel cell FC mounted on a fuel cell vehicle (FCV) and a gas-liquid separator A that separates water contained in anode off-gas (example of the water-containing gas) discharged from an anode side of the fuel cell FC.

Although the fuel cell FC generates electricity through an electrochemical reaction when hydrogen gas as a fuel gas is supplied to its anode side and oxygen-containing air as an oxidizing gas is supplied to its cathode side, only the anode side of the fuel cell FC is shown in the figure.

As shown in FIG. 1, in a power generation system including the fuel cell FC, hydrogen gas stored in a fuel tank T is supplied to the anode side of the fuel cell FC through a supply path L1, and anode off-gas discharged from the anode side of the fuel cell FC is supplied to an inlet 3 of the gas-liquid separator A through a discharge path L2.

The anode off-gas contains unreacted hydrogen gas. The gas-liquid separator A guides the anode off-gas supplied through the inlet 3 into a gas-liquid separation portion 5. The gas-liquid separation portion 5 separates water from the anode off-gas, stores the separated water in a water storage portion 7, and sends the dry anode off-gas from which the water has been separated out into a reduction path L3 through an outlet 4. The anode off-gas thus sent into the reduction path L3 is supplied through the supply path L1 to the anode side of the fuel cell FC by a circulating pump P disposed in a channel of the reduction path L3. The unreacted hydrogen is thus used for power generation.

### [Gas-Liquid Separator]

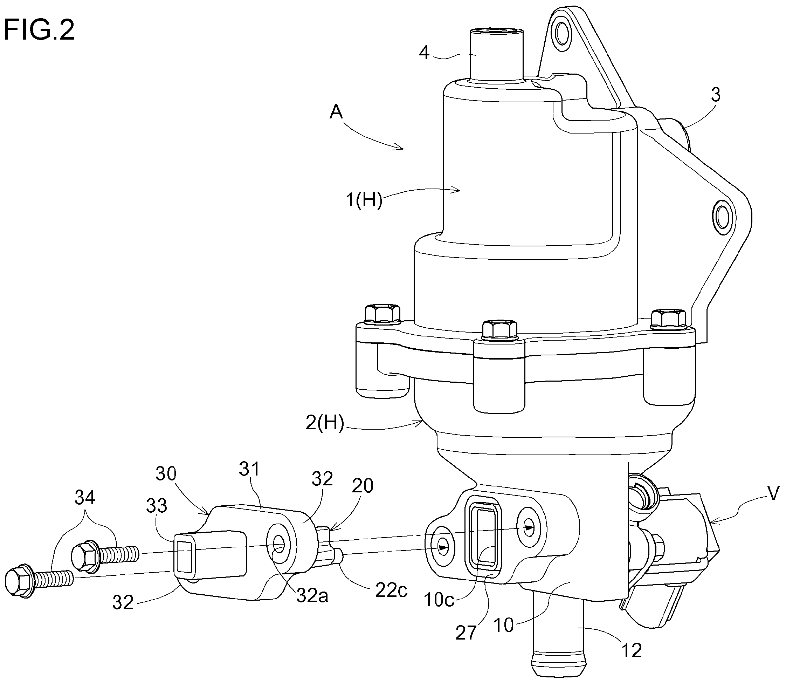

As shown in FIGS. 1 and 2, the gas-liquid separator A includes a housing H composed of an upper housing 1 and a lower housing 2. Flange portions of these housings are connected to each other to combine the upper housing 1 and the lower housing 2. The housing H having an internal space is formed in this manner.

The upper housing 1 includes the cylindrical inlet 3 and the cylindrical outlet 4 at upper positions, and also includes the gas-liquid separation portion 5 inside that separates water from anode off-gas (water-containing gas). The gas-liquid separation portion 5 includes a plurality of collision walls 5a that is in the form of a vertical plate and that separates water as the anode off-gas supplied through the inlet 3 collides with them. The dry anode off-gas that has passed through the gas-liquid separation portion 5 is discharged from the outlet 4.

The lower housing 2 includes an open space 6 that allows the water separated in the gas-liquid separation portion 5 to fall, the water storage portion 7 that stores the water that has fallen through the open space 6, and a filter unit 8 that is located above the water storage portion 7 and that removes dirt etc. contained in the water.

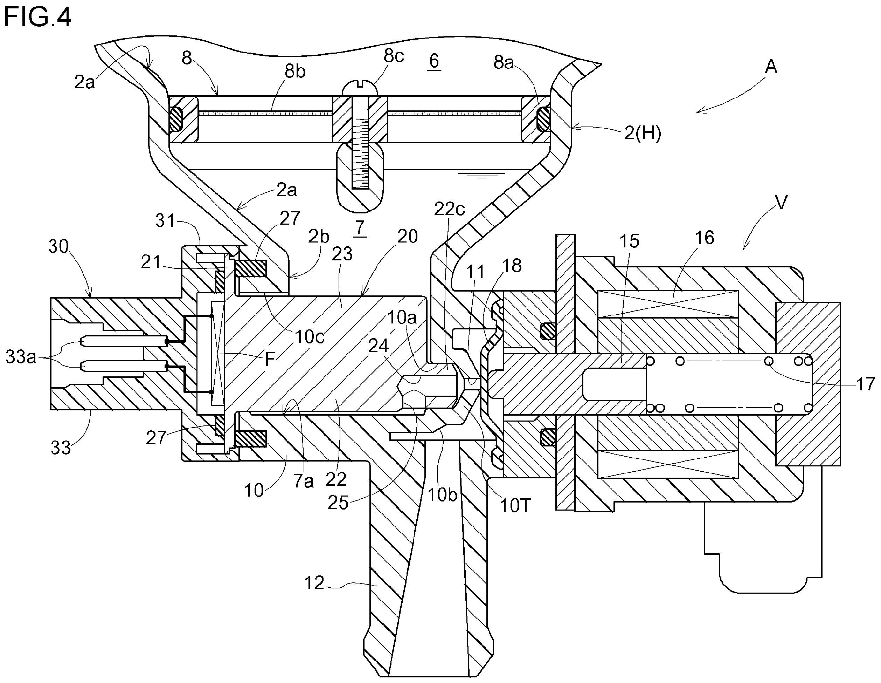

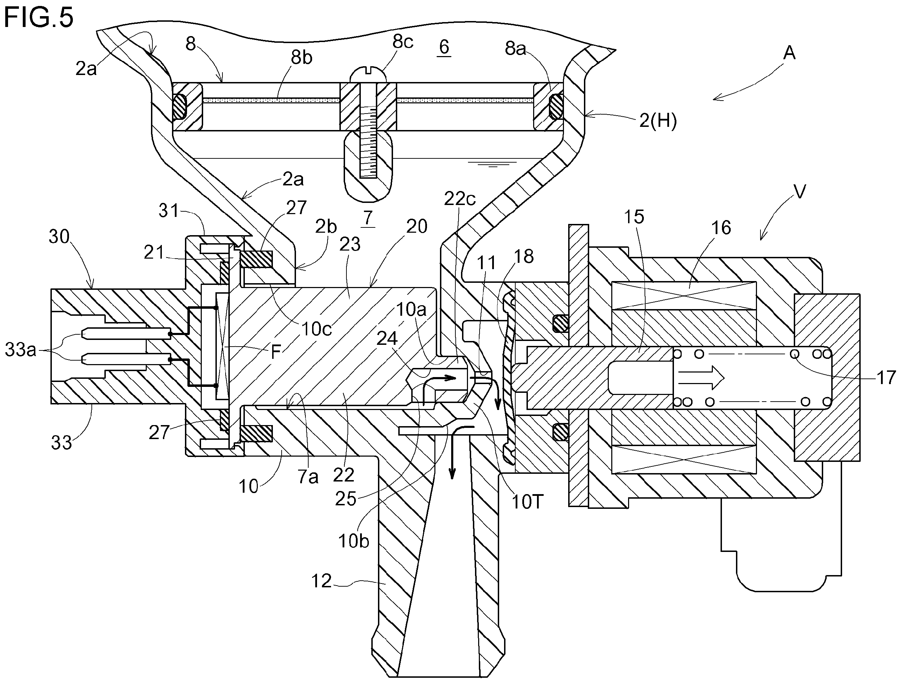

As shown in FIGS. 4 and 5, the lower part of the lower housing 2 has a plurality of funnel-shaped inner surfaces 2a that tapers downward, and the filter unit 8 is disposed at a position above and adjacent to the lowermost funnel-shaped inner surface 2a. A cylindrical inner surface 2b that is circular as viewed in plan is formed at such a position that the cylindrical inner surface 2b is continuous with the lower side of the lowermost funnel-shaped inner surface 2a.

The water storage portion 7 is formed by the space surrounded by the lowermost funnel-shaped inner surface 2a and the space surrounded by the cylindrical inner surface 2b. The water storage portion 7 is not limited to the space that is circular as viewed in plan, and may be rectangular, elliptical, or polygonal as viewed in plan.

The filter unit 8 includes a filter material 8b inside an annular frame 8a, and is fixed at its center to a support portion of the lower housing 2 with a screw 8c. Dirt contained in the water flowing into the water storage portion 7 is thus removed by the filter material 8b.

As shown in FIGS. 4 and 5, a block-shaped portion 10 is formed integrally with the lower end of the lower housing 2, and the water storage portion 7 described above is formed in the block-shaped portion 10.

The block-shaped portion 10 has a recessed portion 10a that is formed in a horizontal attitude at a position communicating with the storage space of the water storage portion 7 and that is recessed outward in a radial direction of the water storage portion 7 as viewed in plan. A discharge hole passage 11 that sends the water stored in the water storage portion 7 in a horizontal direction is formed at an outer end position of the recessed portion 10a.

The block-shaped portion 10 includes a cylindrical discharge portion 12 that communicates with the discharge hole passage 11 via an in-block channel 10b and that discharges the water from the discharge hole passage 11 downward. The block-shaped portion 10 is further provided with an electromagnetic on-off valve V that controls the flow of the water flowing from the discharge hole passage 11 into the discharge portion 12.

As shown in FIGS. 1, 4, and 5, a heating member 20 is provided at the bottom of the water storage portion 7 in a region where the water stored in the water storage portion 7 flows into the discharge hole passage 11. The heating member 20 is made of a material with a high thermal conductivity, such as an aluminum material. A heat-generating element F that, when energized, generates heat and transfers the heat to the heating member 20 is provided outside the water storage portion 7 (outside the block-shaped portion 10).

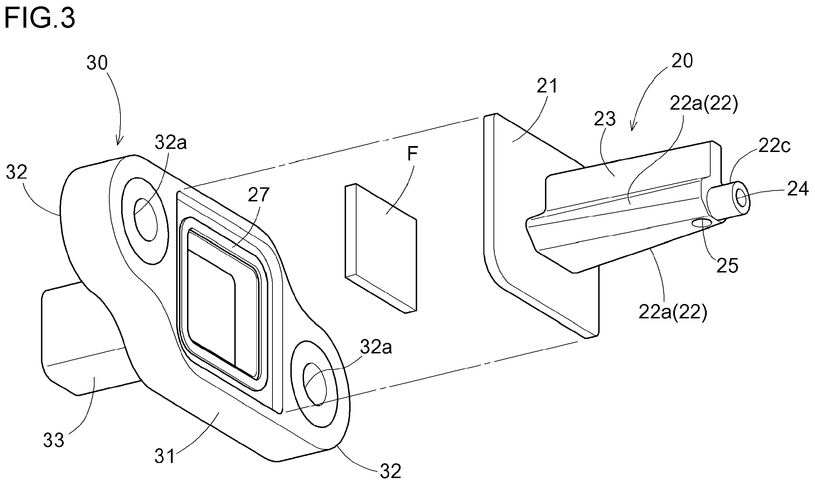

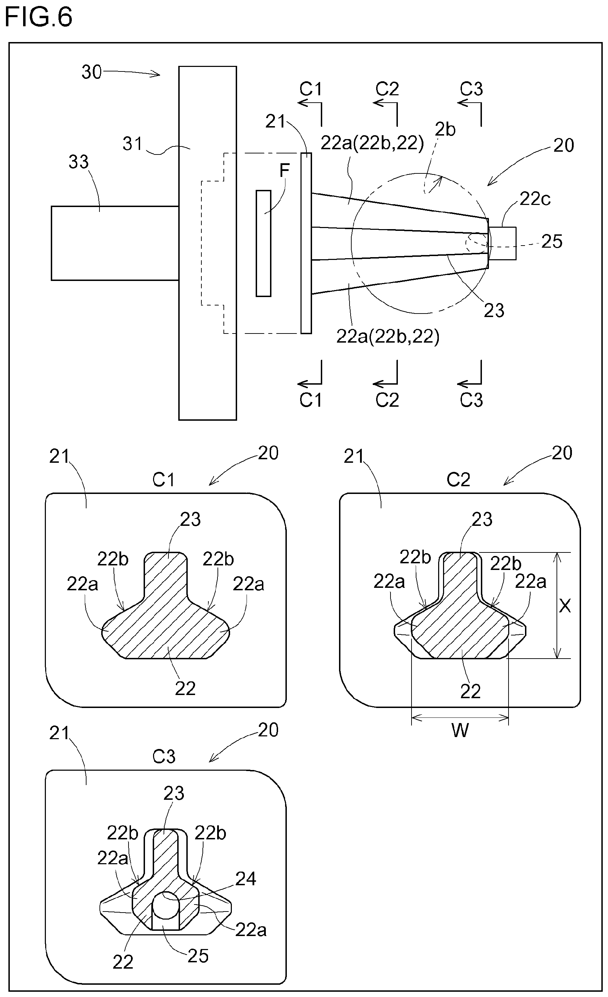

In the block-shaped portion 10, a through hole 10c communicating with the space in the water storage portion 7 is formed on the opposite side of the space in the water storage portion 7 from the discharge hole passage 11. The heating member 20 is disposed so as to be inserted through the through hole 10c. As shown in FIGS. 3 and 6, a plate-shaped portion 21 is formed integrally on the proximal end side of the heating member 20, and the heating member 20 is fixed to the block-shaped portion 10 by a holder 30 that is disposed at such a position that the holder 30 covers the plate-shaped portion 21 and the heat-generating element F. The specific shape of the heating member 20 and the specific manner in which the heating member 20 is fixed will be described later.

As shown in FIGS. 4 and 5, the discharge hole passage 11 is formed at a position slightly higher than a bottom wall 7a of the water storage portion 7, and the recessed portion 10a is formed coaxially with the discharge hole passage 11. As described above, the discharge hole passage 11 is formed in a horizontal attitude such that its inner end communicates with the space in the water storage portion 7 and its outer end communicates with the outside from one end of the block-shaped portion 10. The end on the discharge side of the discharge hole passage 11 is open to a truncated cone-shaped protruding portion 10T.

The discharge hole passage 11 and the discharge portion 12 communicate with each other via the in-block channel 10b of the block-shaped portion 10. Opening the on-off valve V causes the water from the discharge hole passage 11 to flow through the in-block channel 10b into the discharge portion 12, so that the water is discharged.

### [On-Off Valve]

As shown in FIGS. 4 and 5, the on-off valve V includes a plunger 15 made of a magnetic material such as an iron material, an electromagnetic solenoid 16 disposed in a region surrounding the plunger 15, a spring 17 that biases the plunger 15 in such a direction that the plunger 15 protrudes, and a valve disc 18 that is disposed at such a position that the valve disc 18 closes the downstream end of the discharge hole passage 11 and that is made of a membrane-like material, such as rubber, that can flexibly deform between a closed position and an open position.

When the electromagnetic solenoid 16 is not energized, the plunger 15 of the on-off valve V protrudes due to the biasing force of the spring 17, and the valve disc 18 is held at such a position that the valve disc 18 closes the outer end position of the discharge hole passage 11, as shown in FIG. 4. On the other hand, when the electromagnetic solenoid 16 is energized, the plunger 15 shifts in a direction away from the outer end of the discharge hole passage 11 against the biasing force of the spring 17, and the valve disc 18 is operated to the open position, as shown in FIG. 5.

### [Heating Member]

When power generation of the fuel cell is stopped and the fuel cell vehicle is parked in a low-temperature environment, the water remaining in the region from the water storage portion 7 to the discharge hole passage 11 in the gas-liquid separator A may freeze. The water in the water storage portion 7 of the gas-liquid separator A also may freeze in a situation where the fuel cell vehicle is driven in a low-temperature environment. In order to eliminate such freezing, the heating member 20 is provided in such a manner that the heating member 20 is housed at the bottom of the water storage portion 7, as shown in FIGS. 1, 4, and 5.

As shown in FIGS. 2 and 3, the heating member 20 is disposed in such a manner that the heating member 20 is inserted in the bottom of the water storage portion 7 from the outside (outside of the block-shaped portion 10 of the lower housing 2) through the through hole 10c. The heat-generating element F is disposed on the outer surface of the plate-shaped portion 21 formed integrally on the proximal end side of the heating member 20, and the holder 30 is disposed at such a position that the holder 30 covers these. The heating member 20 and the holder 30 are fixed to the block-shaped portion 10 of the lower housing 2 with a plurality of bolts 34.

The heat-generating element F is disposed in contact with the outer surface side (left side in FIGS. 4 and 5) of the plate-shaped portion 21, and heat generated by the heat-generating element F is transferred to the heating member 20. The heat-generating element F is a PTC (Positive Temperature Coefficient) heater having a characteristic that its electrical resistance increases with an increase in temperature.

As described above, the heating member 20 is made of a material with a high thermal conductivity, such as aluminum, and is composed of the plate-shaped portion 21, a heating body 22 (example of the main body), and a vertical wall 23 (example of the upper wall) that are formed integrally. The plate-shaped portion 21 is formed in the shape of a flat plate, and the heating body 22 and the vertical wall 23 integrally extend in a direction perpendicular to a plate surface of the plate-shaped portion 21.

As shown in FIGS. 3 and 6, the vertical wall 23 is formed so that its lateral width becomes slightly narrower toward its distal end located close to the discharge hole passage 11 as viewed in plan, and is formed with a constant thickness in a height direction as viewed from the side. On the other hand, the heating body 22 has a tapered shape that becomes thinner toward its distal end near the discharge hole passage 11 in the direction in which the heating body 22 extends, as viewed in plan. In the region from near the middle of the heating body 22 to the distal end side thereof, at least part of the heating body 22 is configured so that a vertical length X (thickness in the up-down direction of the heating member 20) is greater than a maximum lateral width W (maximum lateral width of the heating body 22) (see C2 in FIG. 6).

The upper part of FIG. 6 shows an exploded plan view of the heating member 20, the heat-generating element F, and the holder 30. In the figure of the heating member 20 shown in the upper part, the cylindrical inner surface 2b of the water storage portion 7 formed in the lower housing 2 is shown by a long dashed double-short dashed line in order to show the positional relationship between the heating member 20 and the water storage portion 7 as viewed in plan.

The middle and lower parts of FIG. 6 show sections of the heating member 20 shown in the upper part, taken along lines C1, C2, and C3. These sections are shown by C1, C2 in the middle part and C3 in the lower part.

As shown in FIGS. 4 and 5, the combination of the heating body 22 and the vertical wall 23 of the heating member 20 is fixed to the lower housing 2 and disposed inside the water storage portion 7. As shown in the sectional view C2 in FIG. 6, the dimensional relationship between the heating body 22 and the vertical wall 23 is set so that the vertical length X of the vertical wall 23 is larger than the maximum lateral width W of at least part of the heating body 22. This relationship between the maximum width W and the length X is not satisfied in the entire region of the heating body 22 and vertical wall 23, and is satisfied only in part of the region.

As shown in FIG. 6, wing-shaped portions 22a are formed in the right and left portions of the heating body 22 of the heating member 20, and tilted surfaces 22b that are tilted downward toward the outer side in the lateral direction are formed on the upper surfaces of the right and left wing-shaped portions 22a.

As shown in FIGS. 3 and 4, a cylindrical portion 22c is formed so as to extend from a distal end portion of the heating body 22 in the direction in which the heating body 22 protrudes (so as to extend in the opposite direction from the plate-shaped portion 21). A main discharge hole 24 is formed in the cylindrical portion 22c, and an inlet hole 25 communicating with the main discharge hole 24 is formed in the lower surface of the heating body 22. The inner diameter of the main discharge hole 24 is larger than the inner diameter of the discharge hole passage 11.

The cylindrical portion 22c of the heating body 22 is disposed at such a position that the cylindrical portion 22c fits inside the recessed portion 10a when the heating member 20 is installed in the lower housing 2. The distal end of the vertical wall 23 that is the opposite end from the plate-shaped portion 21 is disposed at a position near the discharge hole passage 11. In this placement of the heating member 20, the main discharge hole 24 is coaxial with the discharge hole passage 11. Moreover, the main discharge hole 24 is formed in a region extending a predetermined distance from the distal end position of the heating body 22 toward the plate-shaped portion 21, and the inlet hole 25 communicates with the main discharge hole 24.

There is clearance shown in FIGS. 4 and 5 between the lower surface of the heating body 22 and the bottom wall 7a of the water storage portion 7 when the heating member 20 is installed in the lower housing 2. This clearance is set to such a thickness that, even when the water is frozen, causes the frozen portion to have a small thickness and thus allows rapid thawing by heat applied from the heating member 20 and allows the water to flow.

As shown in FIGS. 2 to 5, the holder 30 is made of an insulating resin material, and is composed of a cover portion 31, a pair of connecting portions 32, and a connector portion 33 that are formed integrally.

The cover portion 31 is configured to house the plate-shaped portion 21 of the heating member 20 and contact the outer surface of the block-shaped portion 10. The connecting portions 32 are formed integrally with the outer edge of the cover portion 31, and each have a bolt insertion hole 32a. A pair of electrodes 33a is provided inside a cylindrical connector space of the connector portion 33.

With this configuration, as described above, when installing the heating member 20 in the lower housing 2, the heating member 20 is inserted into the internal space of the water storage portion 7 through the through hole 10c of the block-shaped portion 10, the heat-generating element F is placed on the outer surface of the plate-shaped portion 21 of the heating member 20, the cover portion 31 is placed so as to cover the plate-shaped portion 21 and the heat-generating element F, and the bolts 34 are inserted through the bolt insertion holes 32a of the connecting portions 32 and screwed into internally threaded portions of the block-shaped portion 10 to fix the holder 30.

When installing the heating member 20, a sealing member 27 that is a rubber or resin ring is placed between the outer surface of the block-shaped portion 10 and the plate-shaped portion 21 and between the plate-shaped portion 21 and the cover portion 31.

When the heating member 20 is installed in this manner, the heat-generating element F is in close contact with the outer surface of the plate-shaped portion 21, so that a conductive portion that supplies a current from the electrodes 33a of the connector portion 33 to the heat-generating element F is formed.

### [Heating by Heating Member]

Although not shown in the figures, the fuel cell vehicle includes a control unit that controls the on-off valve V and that controls a current to be supplied to the heat-generating element F. The control unit performs the following control. The control unit obtains, by calculation, the amount of water produced from power generation from the amount of power generated by the fuel cell during traveling, and estimates the amount of water stored in the water storage portion 7. Every time the estimated amount of water reaches a set amount, the control unit opens the on-off valve V for a set period of time to discharge the water in the water storage portion 7 from the discharge hole passage 11.

The following control form may be set instead of this control form. A water level sensor that detects the water surface position to measure the amount of water stored in the water storage portion 7 is provided. Every time the water level detected by the water level sensor reaches a set value, the on-off valve V is opened to discharge the water stored in the water storage portion 7.

In the case where the fuel cell vehicle (FCV) is caused to travel after it is parked in a low-temperature environment below the freezing point and power generation of the fuel cell FC is stopped, the control unit eliminates freezing by supplying a current to the heat-generating element F to increase the temperature of the heating member 20 before the vehicle starts to travel. When eliminating freezing in this manner, scavenging is performed by opening the on-off valve V and setting a predetermined air stoichiometric ratio to operate (generate electricity in) the fuel cell FC.

In the scavenging, the circulating pump P shown in FIG. 1 is driven to circulate gas as follows with the fuel cell FC in operation (generating electricity). The gas inside the gas-liquid separator A is sent to the reduction path L3 through the outlet 4, and the gas is supplied from the reduction path L3 to the anode side of the fuel cell FC. The gas that has passed through the anode side of the fuel cell FC is then returned to the inside of the gas-liquid separator A through the inlet 3 of the gas-liquid separator A via the discharge path L2.

In particular, in the scavenging, a current is supplied to the heat-generating element F to increase the temperature of the heating member 20, thereby increasing the temperature of the space between the lower surface of the heating body 22 and the bottom wall 7a of the water storage portion 7 and thus increasing the temperature of the outer surface of the heating body 22 or vertical wall 23. This eliminates freezing if these portions are frozen. Even in a situation where these portions do not freeze, this increases the water temperature if the temperature of these portions have dropped. As a result, the thawed water is discharged from the discharge hole passage 11.

### [Functions and Effects of Embodiment]

As described above, when installing the heating member 20, the heating member 20 is inserted from the outside into the through hole 10c of the block-shaped portion 10 of the lower housing 2, the heat-generating element F is placed on the outer surface of the plate-shaped portion 21, and the holder 30 is fixed to the outer surface of the block-shaped portion 10. Installation of the heating member 20 is thus completed. Therefore, the heating member 20 can be easily installed, and maintenance is not troublesome. In this configuration, since the heat-generating element F is disposed outside the lower housing 2. This eliminates the risk of water coming into contact with the heat-generating element F and simplifies the configuration for electrical insulation, and there is no risk of electrical leakage or short circuit.

As shown in FIGS. 3 and 6, the heating member 20 is composed of the heating body 22 and the vertical wall 23 that are formed integrally, and these components are disposed inside the space in the water storage portion 7. Therefore, the outer surface that is wide in both vertical and lateral directions can be brought into contact with water, which allows efficient thawing. Even freezing at a relatively high water level in the water storage portion 7 can be eliminated by the vertical wall 23. In particular, since there is the clearance between the lower surface of the heating body 22 and the bottom wall 7a of the water storage portion 7, the temperature of water flowing in the main discharge hole 24 can be increased by creating a water flow in this clearance and causing part of the water in this clearance to flow into the main discharge hole 24 through the inlet hole 25.

As shown in FIGS. 4 and 5, the heating member 20 is disposed in such a manner that the cylindrical portion 22c is fitted in the recessed portion 10a, and this cylindrical portion 22c is thus located near the discharge hole passage 11 formed in the form of an orifice. Therefore, even if the discharge hole passage 11 is frozen, it can be thawed by the heat from this cylindrical portion 22c. In particular, the main discharge hole 24 of the cylindrical portion 22c is disposed coaxially with the discharge hole passage 11, and water is supplied to the main discharge hole 24 through the inlet hole 25. The water heated by the heating member 20 is thus sent out from the main discharge hole 24, so that the discharge hole passage 11 can be thawed efficiently.

As shown in FIG. 6, the pair of wing-shaped portions 22a that is provided in both lateral sides of the middle in the lateral direction so as to expand outward is formed in the lower part of the heating body 22 of the heating member 20. The pair of wing-shaped portions 22a is molded so that their lateral width decreases toward the distal end side (toward the position of the cylindrical portion 22c) as viewed in plan. This allows the water in the water storage portion 7 to flow smoothly into the discharge hole passage 11.

### [Other Embodiments]

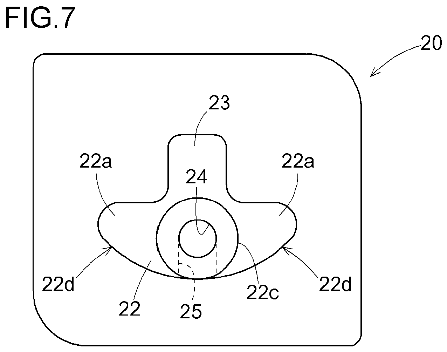

The present disclosure may be configured as follows in addition to the above embodiment (portions having the same functions as those of the above embodiment are denoted by the same numerals and signs as those of the above embodiment).
(a) As shown in FIG. 7, the lower surface of the wing-shaped portion 22a may include a U-shaped tilted surface 22d that is tilted upward toward the outer side in the lateral direction. In this embodiment (a), the upper surface of the wing-shaped portion 22a may be in a horizontal attitude or in such an attitude that the outer part in the width direction of the upper surface of the wing-shaped portion 22a is raised upward. In other words, the shape of the wing-shaped portion 22a may be any shape as long as clearance is provided between the lower surface of the heating body 22 and the bottom wall 7a of the water storage portion 7.
(b) The heating member 20 need not necessarily have, for example, a constant sectional shape such as a trapezoid or a rectangle so that its maximum lateral width is greater than its vertical length in part of the heating member 20. In order to increase the surface area of the heating member 20 and improve the efficiency of heat exchange with water, groove-like portions or irregularities may be formed on the surface thereof. Alternatively, the heating member 20 may be configured so that its maximum lateral width is greater than its vertical length in the entire heating member 20.

The following configurations are possible for the embodiments described above.
<1> A characteristic configuration of a gas-liquid separator (A) according to the present disclosure is that the gas-liquid separator (A) includes: a housing (H) to which a water-containing gas is supplied; a gas-liquid separation portion (5) disposed in an upper part of the housing (H) and configured to separate water from the water-containing gas; a water storage portion (7) disposed in a lower part of the housing (H) and configured to store the water separated from the water-containing gas by the gas-liquid separation portion (5); a discharge hole passage (11) disposed in a lower part of the water storage portion (7) of the housing (H) and configured to discharge the water sent from the water storage portion (7) to outside of the housing (H); and a heating member (20) that protrudes into the water storage portion (7), that is disposed in a region where the water flows into the discharge hole passage (11), and whose temperature increases by heat transferred from a heat-generating element (F) configured to generate the heat when energized, and that the heating member (20) includes a body (22) that protrudes toward the discharge hole passage (11) at a bottom of the water storage portion (7) with the heat-generating element (F) disposed outside the water storage portion (7), and an upper wall (23) that protrudes upward from the body (22).

With this configuration, in a situation where the water in the water storage portion (7) freezes, the temperature of the heating member (20) is increased to apply heat directly to a frozen portion in the region where the water in the water storage portion (7) flows into the discharge hole passage (11) at the bottom of the water storage portion (7). The frozen portion can thus be thawed. Since the heating member (20) includes the body (22) and the upper wall (23) protruding upward from the body (22), the temperature of the water storage portion (7) is increased by bringing a region with a large heat transfer area (mainly the upper wall (23)) into contact with the water flowing into the water storage portion (7). Therefore, even freezing at a relatively high water level in the water storage portion (7) can be eliminated. Moreover, in this configuration, the heat of the heat-generating element (F) disposed outside the water storage portion (7) is transferred to the heating member (20). This eliminates the risk of the water in the water storage portion (7) coming into contact with the heat-generating element (F), and thus ensures electrical insulation. The gas-liquid separator (A) is thus configured that has a simple configuration yet can eliminate freezing at the bottom of the gas-liquid separator (A) and can quickly discharge the water at the bottom.

<2> In the gas-liquid separator (A) according to <1>, the upper wall (23) may extend from a position where the heat-generating element (F) is provided to a position near the discharge hole passage (11).

This configuration provides such a positional relationship that an end of the upper wall (23) in a direction in which the upper wall (23) extends is located near the discharge hole passage (11). Ice accumulated near the discharge hole passage (11) can thus be thawed by the heat transferred from this end.

<3> In the gas-liquid separator (A) according to <1> or <2>, part of the heating member (20) that is located on a side of the discharge hole passage (11) may be greater in vertical length (X) than in maximum lateral width (W).

In this configuration, since the part of the heating member (20) that is located on the side of the discharge hole passage (11) is greater in vertical length (X) than in maximum lateral width (W), it is possible to provide a larger region with a large heat transfer area for the water flowing into the discharge hole passage (11). As a result, not only the storage capacity of the water storage portion (7) is increased, making the device more compact, but also the temperature of the water storage portion (7) can be quickly increased to quickly eliminate freezing.

<4> In the gas-liquid separator (A) according to any one of <1> to <3>, the body (22) may include wing-shaped portions (22a) provided in both lateral sides of a middle in a lateral direction of the body and each having a lateral width that decreases from a proximal end at which the body (22) is fixed toward a distal end located near the discharge hole passage (11).

In this configuration, since the wing-shaped portions (22a) are formed in the regions extending laterally from the body (22), the discharge hole passage (11) can be thawed by heat from wide surfaces of the wing-shaped portions (22a). Since the lateral widths of the wing-shaped portions (22a) decrease toward the distal end close to the discharge hole passage (11), thermal conduction properties become better toward the distal end side. This not only allows effective thawing of the discharge hole passage (11), but also reduces resistance that is applied from the wing-shaped portions (22a) to the water when the water heated by the heating member (20) flows into the discharge hole passage (11), thereby allowing a smooth water flow.

<5> In the gas-liquid separator (A) according to <4>, an upper surface of the wing-shaped portion (22a) may be in an attitude tilted downward toward an outer side in the lateral direction.

In this configuration, the water flowing into the water storage portion (7) flows outward on the upper surface of the wing-shaped portion (22a). This reduces resistance that is applied from the wing-shaped portion (22a) to the water, thereby allowing a smooth water flow. When the temperature of the heating member (20) is increased with the water storage portion (7) frozen, heat is transferred from the wide surface of the wing-shaped portion (22a). Therefore, rapid thawing is achieved.

<6> In the gas-liquid separator (A) according to <4>, a lower surface of the wing-shaped portion (22a) may be in an attitude tilted upward toward an outer side in the lateral direction.

This provides a wide heat transfer area on the lower surface of the wing-shaped portion (22a) for rapid thawing. Since the middle part in the lateral direction of the wing-shaped portion (22a) is located close to the bottom of the water storage portion (7), a space through which the thawed water flows is provided between the lower side of the wing-shaped portion (22a) in the region outside this middle part and the bottom of the water storage portion (7). This allows the water to flow smoothly from this space to the discharge hole passage (11).

The configurations disclosed in the above embodiments (including other embodiments, the same applies below) can be applied in combination with the configurations disclosed in any of other embodiments as long as no contradiction arises. The embodiments disclosed in the present specification are by way of example. Embodiments of the present disclosure are not limited to these, and can be appropriately modified without departing from the purpose of the present disclosure.

### INDUSTRIAL APPLICABILITY

The present disclosure is applicable to gas-liquid separators.

### Description of the Reference Numerals

- 5: gas-liquid separation portion

- 7: water storage portion
- 11: discharge hole passage
- 20: heating member
- 22: heating body (body)
- 22a: wing-shaped portion
- 23: vertical wall (upper wall)
- A: gas-liquid separator
- F: heat-generating element
- H W: housing width
- X: thickness

## Claims

1. A gas-liquid separator comprising:
a housing to which a water-containing gas is supplied;
a gas-liquid separation portion disposed in an upper part of the housing and configured to separate water from the water-containing gas;
a water storage portion disposed in a lower part of the housing and configured to store the water separated from the water-containing gas by the gas-liquid separation portion;
a discharge hole passage disposed in a lower part of the water storage portion of the housing and configured to discharge the water sent from the water storage portion to outside of the housing; and
a heating member that protrudes into the water storage portion, that is disposed in a region where the water flows into the discharge hole passage, and whose temperature increases by heat transferred from a heat-generating element configured to generate the heat when energized, wherein the heating member includes a body that protrudes toward the discharge hole passage at a bottom of the water storage portion with the heat-generating element disposed outside the water storage portion, and an upper wall that protrudes upward from the body.

2. The gas-liquid separator according to claim 1, wherein the upper wall extends from a position where the heat-generating element is provided to a position near the discharge hole passage.

3. The gas-liquid separator according to claim 1 or 2, wherein part of the heating member that is located on a side of the discharge hole passage is greater in vertical length than in maximum lateral width.

4. The gas-liquid separator according to any one of claims 1 to 3, wherein the body includes wing-shaped portions provided in both lateral sides of a middle in a lateral direction of the body and each having a lateral width that decreases from a proximal end at which the body is fixed toward a distal end located near the discharge hole passage.

5. The gas-liquid separator according to claim 4, wherein an upper surface of the wing-shaped portion is in an attitude tilted downward toward an outer side in the lateral direction.

6. The gas-liquid separator according to claim 4, wherein a lower surface of the wing-shaped portion is in an attitude tilted upward toward an outer side in the lateral direction.
